# EUROPÄISCHE PATENTSCHRIFT

(11) **EP 2 893 234 B1**
(45) Veröffentlichungstag und Bekanntmachung des Hinweises auf die Patenterteilung: **30.11.2016**
(21) Anmeldenummer: 13774059.3
(22) Anmeldetag: 02.09.2013
(51) Int. Cl.: F16K 37/00, F16K 41/04, G01M 3/28

(54) **VORRICHTUNG UND VERFAHREN ZUR ÜBERWACHUNG VON REGEL- ODER ABSPERRARMATUREN**
DEVICE AND METHOD FOR MONITORING CONTROL VALVES OR SHUT-OFF VALVES
DISPOSITIF ET PROCÉDÉ DE SURVEILLANCE DE VANNES DE RÉGLAGE OU D'ARRÊT

(30) Priorität: 03.09.2012 DE 102012017320
(43) Veröffentlichungstag der Anmeldung: 15.07.2015
(73) Patentinhaber: Siepmann-Werke GmbH & Co. KG, 59581 Warstein (DE)
(72) Erfinder: MARTENS, Alex, 59609 Anröchte (DE); WESTERWELL, Klaus, 58762 Altena (DE); PLÜCKER, Axel, 52353 Düren (DE)
(74) Vertreter: Schneiders, Josef
(86) Internationale Anmeldenummer: PCT/EP2013/002629
(87) Internationale Veröffentlichungsnummer: WO 2014/032812

(56) Entgegenhaltungen:
- DE-A1- 4 326 343
- JP-A- H09 105 466

## Beschreibung

Die Erfindung betrifft eine Vorrichtung und ein Verfahren zur Überwachung von Regel- oder Absperrarmaturen, die eine Stopfbuchspackung zur Abdichtung der von einem Antrieb angetriebenen Betätigungsstange des Betätigungsorgans der Regel- oder Absperrarmatur und eine Vielzahl von Sensoren aufweisen, deren Messdaten von einem Expertensystem verarbeitet und über eine optische Vorrichtung und/oder über ein Bussystem zur weiteren Verwendung ausgegeben werden, wobei der Stopfbuchspackung mindestens ein Drucksensor zur Lecküberwachung zugeordnet ist.

Ein Überwachungssystem der genannten Art ist beispielsweise aus der DE 43 26 343 A1 bekannt. Dieses Überwachungssystem verwendet Sensoren, die den Betrieb der Regel- oder Absperrarmatur kontrollieren. Dabei wird immer ein Vergleich mit den Ausgangskennlinien durchgeführt und bei Abweichung um einen vorbestimmten Betrag ein Alarm ausgelöst. Dieser Alarm kann über einen Feldbus signalisiert werden.

Prinzipiell hat das vorgenannte Überwachungssystem den Vorteil einer nahezu lückenlosen Überwachung und einer Frühanzeige von aufkommenden Schäden. Die frühzeitige Erkennung von Fehlfunktionen an Regel- oder Absperrarmaturen vermindert das Risiko für das Betriebspersonal und ermöglicht rechtzeitige Reparaturen an den Regel- oder Absperrarmaturen.

Das vorbekannte Überwachungssystem hat jedoch den Nachteil, dass es anfällig für Fehlalarme ist. Generell ist die steigende Zahl von Fehlalarmen auf den zunehmenden Einsatz von besonders sensiblen Sensoren zurückzuführen. Diese führen durch ihre sehr hohe Sensitivität bereits bei relativ geringen Abweichungen von vordefinierten Kennlinien zu Alarmsignalen. Ein dadurch verursachtes vorzeitiges Stilllegen der Regel- oder Absperrarmatur blockiert den Betriebsablauf und führt oft zu unnötig hohen Kosten. Die Häufigkeit von Fehlalarmen führt zu dem weiteren Problem, dass das Betriebspersonal eine gewisse Immunität gegenüber Warnmeldungen aufbaut, um - vermeintlich - den Betriebsablauf nicht unnötig zu stören.

Wenn aufgrund eines solchen Verhaltens eine Warnmeldung falsch eingeschätzt und nicht ernst genommen wird, kann dies bedrohliche Konsequenzen haben, die bei hohen Drücken und Temperaturen im durchströmenden Druckmedium sogar lebensbedrohlich für das Betriebspersonal sein können.

Aus der DE 195 03 864 A1 ist eine Plungerpumpe bekannt, deren oszillierend bewegter Plunger im Pumpenkopf durch eine Stopfbuchspackung abgedichtet ist. Diese Stopfbuchspackung ist mit einem Kühlsystem versehen, dessen Kühlflüssigkeit einen Kontrollraum oberhalb der Stopfbuchspackung durchströmt, die in der Stopfbuchpackung entstehende Reibungswärme abführen soll und zugleich die Stopfbuchspackung im Hinblick auf Ihre Dichtigkeit überwachen soll. Diese Überwachung erfolgt dadurch, dass das den Kontrollraum durchströmende Kühlmittel auf Volumenzunahme, die Durchflussmenge, die Durchflussgeschwindigkeit, die Temperatur, Druckveränderungen, die Pulsationsamplitude, die Pulsationsfrequenz, die oberen Spitzen der Pulsationsamplitude, die unteren Spitzen der Pulsationsamplitude, den Pulsationsamplitudenmittelwert, und/oder die Pulsationsbandbreite überwacht wird, so dass bei Überschreiten von Grenzwerten ein Alarm ausgegeben werden kann. Ein solches Überwachungssystem ist für die Überwachung der Stopfbuchspackung einer Absperr- und Regelarmatur natürlich bei Weitem zu kompliziert.

Aus der DE 199 47 129 A1 ist ein Diagnosesystem für eine Armatur bekannt, bei welchem ein Neuro-Fuzzy-Logik basiertes Expertensystem Messwerte von Sensoren verarbeitet und über eine Datenschnittstelle mittels Feldbus an eine zentrale Auswertung ausgibt. Dieses Diagnosesystem arbeitet allerdings ausschließlich mit Körperschallsensoren.

Aus der JP 09105466 ist eine Stopfbuchspackung für eine Ventilspindel bekannt, die aus im Querschnitt V-förmigen Packungsringen besteht, die durch den anstehenden Druck axial gegen eine feststehende Stopfbuchsbrille angepresst werden und sich dabei radial aufspreizen, um hierdurch einen dichten Abschluss zu erzielen. Zur Überwachung der Funktionsfähigkeit dieser Stopfbuchspackung wird hier durch geeignete Sensoren die Verformung und/oder Spannung im oberen Bereich der Dichtungspackung überwacht. Eine Druckmessung als solche ist hier nicht vorgesehen.

Aus der DE 10 2006 060 382 ist eine Messsensorik für eine statische oder dynamische Dichtung bekannt, die Zustandsänderungen des Dichtungsmaterial detektiert, insbesondere Dehnungen oder Stauchungen oder durch Druck bewirkte Veränderungen der Dichtung.

Aus dem deutschen Gebrauchsmuster DE 298 11 115 U1 ist schließlich ein Messsystem zur Überwachung der Stellspindel einer Absperrarmatur bekannt, welches die Kräfte und Wege beim Verstellen der Spindel auf etwaige Auffälligkeiten überwacht.

Ein besonders häufiger Anlass für Fehlalarme und die damit verbundenen Gefahren für das Betriebspersonal sind kleine Undichtigkeiten im Bereich der zur Abdichtung der Betätigungsstange dienenden Stopfbuchse. Undichtigkeiten dort lassen sich im Normalfall auf einfache Art und Weise dadurch beheben, dass durch Anziehen der Spannschrauben der Stopfbuchsbrille die axiale Vorspannung der Stopfbuchspackung erhöht wird, bis die Undichtigkeit beseitigt ist. Dieses Nachspannen der Stopfbuchspackung kann aber auch gefährlich sein und zur plötzlichen Zerstörung und vollständigen Undichtigkeit der gesamten Stopfbuchspackung führen, und zwar dann, wenn das Packungsmaterial von dem durch die Leckage strömenden Druckmedium bereits ganz oder teilweise zerstört ist. Ein solcher Schaden ist regelmäßig mit einem starken Abfall der Vorspannung der Stopfbuchspackung verbunden.

Es ist Aufgabe der Erfindung, die Vorrichtung und das Verfahren der eingangs genannten Art sicherer gegen Fehlalarme zu machen, insbesondere wenn eine hochsensible Messsensorik zum Einsatz kommt.

Gegenstand der Erfindung ist eine Überwachungsvorrichtung für eine Absperrarmatur mit den Merkmalen des Patentanspruchs 1. Gegenstand der Erfindung ist weiterhin ein zugehöriges Verfahren mit den Merkmalen des Patentanspruchs 9.

Durch die Lehre der Erfindung ist es möglich, eine qualifizierte Warnmeldung erst dann abzusetzen, wenn eine vordefinierte Kombination von Druck in der Stopfbuchspackung und Vorspannung in der Spannvorrichtung vorliegt. Auf diese Art und Weise kann die Überwachungsvorrichtung gemäß der Erfindung gut zwischen gefährlichen und weniger gefährlichen Grenzwertüberschreitungen unterscheiden, so dass im Ergebnis die Anzahl der von der hochsensiblen Sensorik ausgelösten Fehlalarme erheblich reduziert werden kann. Liegt lediglich eine Leckage der Stopfbuchspackung vor, so bedeutet dies nicht, dass die Regel- oder Absperrarmatur sofort abgeschaltet werden müsste. Sollte jedoch gleichzeitig angezeigt werden, dass die Vorspannung der Stopfbuchspackung erheblich niedriger als vorgeschrieben ist, dürfen auf keinen Fall die die Stopfbuchspackung spannenden Schrauben nachgezogen werden, weil sonst die oben diskutierte schlagartige Zerstörung der vorgeschädigten Stopfbuchspackung zu befürchten ist. Im Ergebnis werden somit die Risiken für das Betriebspersonal erheblich reduziert.

Bei einer vorteilhaften Ausführungsform erfolgt die Überwachung der Vorspannung der Stopfbuchspackung über den Spannschrauben der Stopfbuchspackung zugeordnete faseroptische Kraftsensoren, die beispielsweise zwischen den Schraubenmuttern der Spannschrauben und der Stopfbuchsbrille angeordnet sind. Aufgrund der hohen Sensitivität von solchen faseroptischen Kraftsensoren war es im Hinblick auf die Fehlalarmanfälligkeit ein Wagnis, diese Messmethode zur Vorspannungsüberwachung zu verwenden. Aufgrund der Kombination dieses Messsignals mit einem weiteren Kriterium, nämlich dem Drucksignal der Leckageüberwachung, lässt sich dennoch ein Fehlalarm zuverlässig vermeiden.

Zur weiteren Verbesserung der Leckageüberwachung ist bei der Überwachungsvorrichtung gemäß der Erfindung ein in die Stopfbuchspackung integrierter Laternenring vorgesehen, der den Anschlussbereich des der Leckageüberwachung dienenden Drucksensors frei hält. Solche Laternenringe zur Leckageüberwachung sind nach dem Stand der Technik bekannt, werden hier aber erstmals in Kombination mit der oben erläuterten Messung der axialen Vorspannkraft der Stopfbuchspackung verwendet, mit dem Ergebnis einer erheblich verbesserten Fehlerdiagnose.

Eine weitere vorteilhafte Ausgestaltungsvariante der Überwachungsvorrichtung sieht vor, dass zusätzlich der Antrieb der Betätigungsstange mit einer Verschleißüberwachungseinrichtung versehen ist, die Stellwegsensoren und/oder Stellkraftsensoren und/oder Drehmomentsensoren enthält. Auch diese Sensoren sind über entsprechenden Signalleitungen mit dem Expertensystem verbunden und liefern Messdaten, die ggf. auf eine Verschlechterung des Zustandes des Antriebssystems schließen lassen. Auch diese Messdaten werden simultan mit den anderen Messdaten der Überwachungsvorrichtung ausgewertet.

Zur Überwachung des Sitzbereichs zwischen den Sitzringen und dem Absperrorgan auf Leckage werden zusätzlich Sensoren in Form von Beschleunigungsaufnehmern oder Körperschallsensoren verwendet. Diese Messsensoren geben zusätzlich Auskunft über den Zustand der Abdichtung im Sitzbereich der Regel- oder Absperrarmatur und sind vorzugsweise in der Nähe der Sitzbereiche an dem Gehäuse befestigt. Bei hohen Temperaturen kann es auch sinnvoll sein, diese Sensoren am Bügelaufsatz oder mit Kühladaptern am Gehäuse der Armatur zu befestigen.

Ein weiteres vorteilhaftes Gestaltungsdetail liegt in der Sicherung des Gehäuses gegen Überdruck. Hierfür kommt beispielsweise eine an das Gehäuse angeschlossene Überdrucksicherung mit Berstscheibe in Frage. In diesem Fall erfasst ein der Berstscheibe zugeordneter Fasersensor das beim Bersten der Berstscheibe austretende Medium und gibt ein entsprechendes Signals aus. Alternativ kommt als Überdrucksicherung auch ein federbelastetes Kegelventil in Frage, dessen Kegel und Führungsstück bei Überdruck gegen die Kraft einer Tellerfeder verschoben werden, wobei diese Bewegung durch einen hochpräzisen Schalter überwacht wird, der bei der geringsten Bewegung ein Schaltsignal ausgibt.

Alle Informationen der vorgenannten Sensoren werden simultan in dem Expertensystem verarbeitet und führen über ein logisches System zu den jeweiligen Schlussfolgerungen. Dabei wird vorzugsweise Fuzzy-Logik verwendet. Das bedeutet, dass die Kombination scharfer sowie unscharfer Kriterien zu einer effizienten Schlussfolgerung führt. Nach dem Stand der Technik werden nur scharfe Kriterien zur Überwachung von Regel- oder Absperrarmaturen herangezogen. Diesbetreffend erfindungskennzeichnend ist die Einbeziehung auch von unscharfen Eingangsgrößenbereichen und Kriterien in das Entscheidungssystem. Auf diese Art und Weise vermeidet die Vorrichtung gemäß der Erfindung insbesondere solche Fehlalarme, die durch die oben diskutierte hohe Sensitivität einzelner Messsensoren verursacht werden können.

Ein besonderes Kennzeichen des Verfahrens gemäß der Erfindung ist weiterhin die Verwendung eines Expertensystems zur Verarbeitung der gesammelten Information mit Fuzzy-Logik.

Ein Ausführungsbeispiel der Erfindung wird im Folgenden anhand der Zeichnung näher erläutert.

Es zeigen:

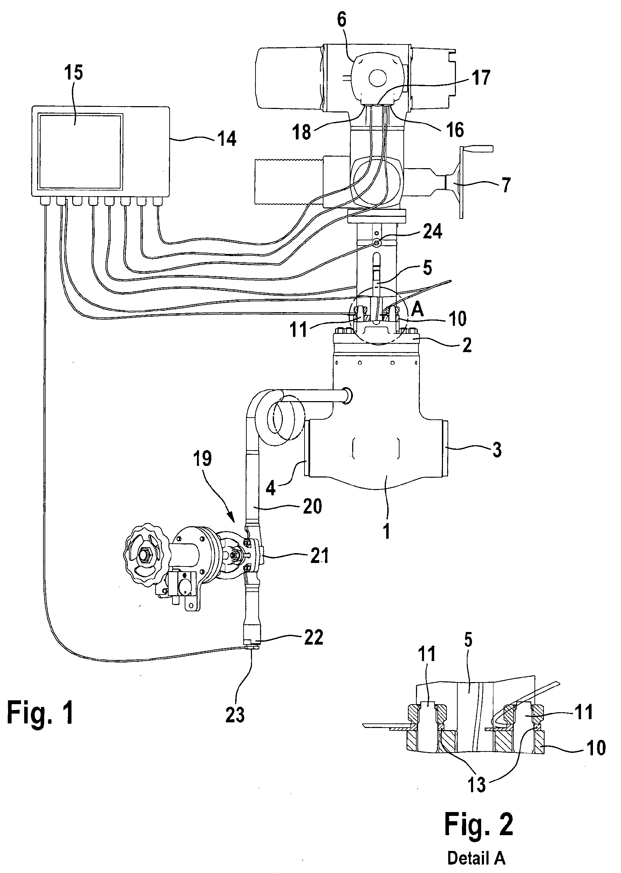

- Fig. 1:: Schematisch eine Seitenansicht einer Regel- oder Absperrarmatur mit einer Überwachungsvorrichtung gemäß der Erfindung;
- Fig. 2:: das Detail A aus Figur 1;

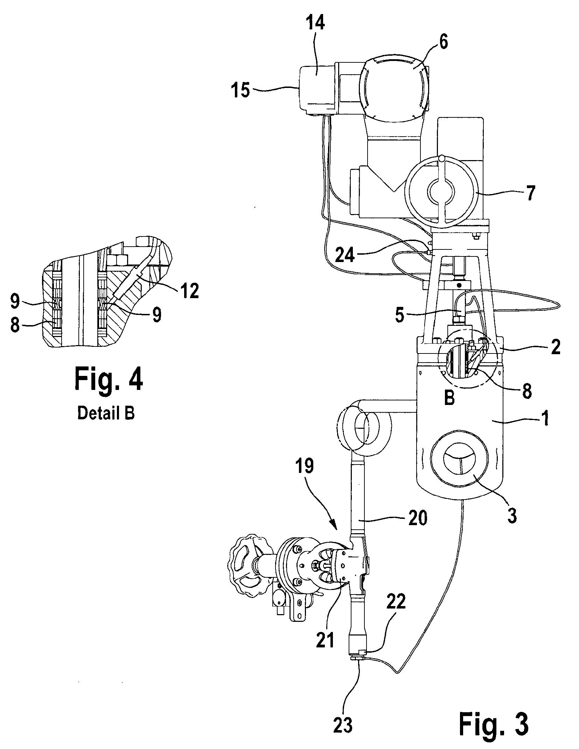

- Fig. 3:: schematisch eine Stirnansicht zu Figur 1;
- Fig. 4:: das Detail B aus Figur 3;

In der Zeichnung ist das Gehäuse der Regel- und Absperrarmatur mit dem Bezugszeichen 1 bezeichnet. Dieses Gehäuse 1 weist einen Gehäusedeckel 2 sowie Anschlüsse 3 und 4 auf, an die die das Druckmedium führenden Leitungen angeschlossen werden können.

Im Inneren enthält das Gehäuse 1 mindestens ein bewegliches Absperrorgan zum Beispiel in Form einer Schieberplatte oder einer Klappe (nicht dargestellt) sowie mit dem Absperrorgan zusammenwirkende Sitzringe (ebenfalls nicht dargestellt). Zum Bewegen des Absperrorgans dient eine verschiebbare und/oder verdrehbare Betätigungsstange 5, die von einem motorischen Antrieb 6 und/oder einem Handantrieb 7 verschoben und/oder verdreht werden kann.

Zur druckdichten Durchführung der Betätigungsstange 5 durch den Gehäusedeckel 2 dient eine Stopfbuchspackung 8, die in ihrem Längenbereich von einem Laternenring 9 unterbrochen ist und mittels einer Stopfbuchsbrille 10 und Spannschrauben 11 axial vorgespannt ist.

Die Funktionsfähigkeit der Stopfbuchspackung 8 wird kontinuierlich überwacht, und zwar einerseits durch einen Drucksensor 12, der auf Druckveränderungen in vom Laternenring 9 freigehaltenen Raum reagiert, und andererseits durch faseroptische Kraftmesssensoren 13, die den Spannschrauben 11 der Stopfbuchsbrille 10 zugeordnet sind und die jeweils vorhandene Vorspannkraft der Spannschrauben 11 der Stopfbuchsbrille 10 überwachen.

Die Messsignale des Drucksensors 12 am Laternenring 9 und der faseroptischen Kraftmesssensoren 13 der Spannschrauben 11 werden simultan von einem Expertensystem 14 mit einer Fuzzy-Regelung analysiert und ausgewertet und über eine optische Ausgabe 15 am Expertensystem 14 angezeigt. Alternativ können die Auswertergebnisse auch über ein Bussystem an eine Fernüberwachung weitergegeben werden.

Aufgrund der simultanen Signalauswertung kann weitestgehend sicher ermittelt werden, ob und welche Störungen am überwachten System vorliegen. Die Störungsmeldungen können über die optische Anzeige 15 angezeigt und/oder das angeschlossene Bussystem weitergeleitet und weiter verarbeitet werden.

Weiterhin sind dem motorischen Antrieb 6 der Betätigungsstange 5 drei Sensoren 16, 17 und 18 zugeordnet, die gemeinsam eine Verschleißüberwachungseinrichtung für alle bewegten Teile des Antriebs darstellen und über entsprechende Signalleitungen mit dem Expertensystem 14 verbunden sind. Auch die von den Sensoren 16, 17 und 18 stammenden Messdaten können simultan mit den anderen Messdaten in dem Expertensystem 14 verarbeitet werden.

Weiterhin ist das Gehäuse 1 mit einer Überdrucksicherung 19 versehen, bestehend aus einem Druckentlastungsrohr 20, welches mit dem Innenraum des Gehäuses 1 in Verbindung steht und mit einem Druckentlastungsventil 21 versehen ist, über welches der Innenraum des Gehäuses 1 druckentlastet werden kann. Weiterhin ist das Druckentlastungsrohr 20 an seinem Ende mit einer Berstscheibe 22 versehen, deren Zustand von einem Sensor 23 überwacht wird. Dieser Sensor 23 zeigt an, wenn bei geborstener Berstscheibe 22 das Druckmedium aus den Druckentlastungsrohr 20 und damit aus dem Gehäuse 1 entweicht. Auch dieser Sensor 22 ist über eine Signalleitung mit dem Expertensystem 14 verbunden, so dass auch die Drucküberwachung des Gehäuses 1 zusätzlich in das Überwachungssystem einbezogen werden kann.

Schließlich ist an der Regel- und Absperrarmatur, vorzugsweise am Gehäuse 1 in der Nähe der Sitzringe, ein Beschleunigungssensor 24 und/oder ein Körperschallsensor angeordnet, der die durch Leckagen im Bereich der Sitzringe erzeugten Geräusche detektiert. Auch die Messwerte dieses Sensors 24 werden dem Expertensystem 14 über eine entsprechende Signalleitung zugeführt und zusätzlich in das Überwachungssystem einbezogen. Zur Durchführung des Verfahrens werden die unterschiedlichen Messgrößen der Sensoren der Regel- oder Absperrarmatur in das Expertensystem 14 eingelesen. Die optische Ausgabe 15, vorzugsweise ein separates Display, ermöglicht eine permanente Beobachtung der einzelnen Messgrößen. Damit behalten diese Messgrößen ihre Bedeutung zur permanenten Überwachung. Gleichzeitig greift allerdings das Expertensystem 14 auf die ausgelesenen Messgrößen zu. Dieses Expertensystem 14 verwendet vorzugsweise Fuzzy-Logik, die sich dadurch auszeichnet, dass nicht nur genau gemessene Messgrößen, sondern auch ungenau bestimmte Messwertbereiche als Kriterium herangezogen werden. Tritt eine vordefinierte Kombination von Kriterien bzw. Messgrößen ein, generiert das Expertensystem 14 ein entsprechendes Alarmsignal. Wenn keines oder nur eines der vordefinierten Kriterien vorliegt, bleibt dieses Alarmsignal aus.

An das ggf. vorhandene Alarmsignal können ggf. automatische Abschaltfunktionen oder die Einleitung von Gegenmaßnahmen zur Beseitigung der Störung geknüpft werden.

## Patentansprüche

1. Überwachungsvorrichtung für Regel- oder Absperrarmaturen, die eine Stopfbuchspackung (8) zur Abdichtung der von einem Antrieb (6) angetriebenen Betätigungsstange (5) des Betätigungsorgans der Regel- oder Absperrarmatur und eine Vielzahl von Sensoren aufweist, deren Messdaten von einem Expertensystem (14) verarbeitet und über eine optische Vorrichtung und/oder über ein Bussystem zur weiteren Verwendung ausgegeben werden, wobei der Stopfbuchspackung (8) mindestens ein Drucksensor (12) zur Lecküberwachung zugeordnet ist, **gekennzeichnet durch** mindestens einen einer Spannvorrichtung (10, 11) der Stopfbuchpackung (8) zugeordneten Kraftsensor (13) zur Überwachung der Vorspannung der Stopfbuchspackung (8), wobei die Messdaten von Drucksensor (12) und Kraftsensor (13) von dem Expertensystem (14) simultan ausgewertet werden.

2. Überwachungsvorrichtung nach Anspruch 1, **dadurch gekennzeichnet, dass** der Kraftsensor (13) ein faseroptischer Kraftsensor ist.

3. Überwachungsvorrichtung nach den Ansprüchen 1 oder 2, **dadurch gekennzeichnet, dass** in die Stopfbuchspackung (8) mindestens ein Laternenring (9) integriert ist, der den Anschlussbereich des Drucksensors (12) frei hält.

4. Überwachungsvorrichtung nach einem der vorangehenden Ansprüche, **dadurch gekennzeichnet, dass** der Antrieb (6) der Betätigungsstange (5) mit einer Verschleißüberwachungseinrichtung versehen ist, die Stellwegsensoren (16) und/oder Stellkraftsensoren (17) und/oder Drehmomentsensoren (18) enthält, deren Messdaten ebenfalls von dem Expertensystem (14) ausgewertet werden.

5. Überwachungsvorrichtung nach einem der vorangehenden Ansprüche, **dadurch gekennzeichnet, dass** der Absperr- oder Regelarmatur zusätzlich mindestens ein Beschleunigungssensor (24) und/oder Körperschallsensor zugeordnet ist, der die Absperr- und Regelarmatur auf Leckagen zwischen den Sitzringen und dem Absperrorgan überwacht und deren Messdaten ebenfalls von dem Expertensystem (14) ausgewertet werden.

6. Überwachungsvorrichtung nach einem der vorangehenden Ansprüche, **dadurch gekennzeichnet, dass** dem Gehäuse (1) der Regel- oder Absperrarmatur eine sensorisch überwachte Überdrucksicherung zugeordnet ist, deren Überwachungsdaten ebenfalls von dem Expertensystem (14) ausgewertet werden.

7. Überwachungsvorrichtung nach einem der vorangehenden Ansprüche, **dadurch gekennzeichnet, dass** das Expertensystem (14) zur Verarbeitung der gesammelten Informationen und der damit verbundenen Schlussfolgerungen ein Fuzzy-Logik-System verwendet.

8. Überwachungsvorrichtung nach Anspruch 7, **dadurch gekennzeichnet, dass** die Inferenzmaschine des Fuzzy-Logik-Expertensystems (14) der Regel- oder Absperrarmatur bei der Feststellung von festgelegten Kombinationen von Kriterien ein Warnsignal ausgibt.

9. Verfahren zur Überwachung von Regel- oder Absperrarmaturen, die eine Stopfbuchspackung (8) zur Abdichtung der von einem Antrieb angetriebenen Betätigungsstange (5) des Betätigungsorgans der Regel- und Absperrarmatur und eine Vielzahl von Sensoren aufweisen, deren Messdaten von einem Expertensystem (14) verarbeitet und über eine optische Vorrichtung und/oder über ein Bussystem zur weiteren Verwendung ausgegeben werden, wobei der der Stopfbuchspackung (8) zugeordnete Drucksensor (12) die Stopfbuchspackung (8) auf Leckagen überwacht, **dadurch gekennzeichnet, dass** zugleich mit einem einer Spannvorrichtung (10, 11) der Stopfbuchspackung (8) zugeordneten Kraftsensor (13) die Vorspannung der Stopfbuchspackung (8) gemessen wird, dass die Messdaten von Drucksensor (12) und Kraftsensor (13) simultan von dem Expertensystem (14) ausgewertet werden und dass bei einer vordefinierten Kombination von Messgrößen ein Alarmsignal ausgegeben wird.

10. Verfahren zur Überwachung nach Anspruch 9, **dadurch gekennzeichnet, dass** das Expertensystem (14) zur Verarbeitung der gesammelten Informationen und der daraus zu ziehenden Schlussfolgerungen ein Fuzzy-Logik-System verwendet.

## Claims

1. Monitoring apparatus for control or shut-off valves, which has a stuffing box packing (8) for sealing the actuation rod (5) of the actuation element of the control or shut-off valve, which actuation rod is driven by a drive (6), and a multiplicity of sensors, the measurement data from which are processed by an expert system (14) and are output via an optical apparatus and/or a bus system for further use, the stuffing box packing (8) being assigned at least one pressure sensor (12) for leakage monitoring, **characterized by**
at least one force sensor (13) which is assigned to a clamping apparatus (10, 11) of the stuffing box packing (8) and is intended to monitor the prestress of the stuffing box packing (8), the measurement data from the pressure sensor (12) and from the force sensor (13) being simultaneously evaluated by the expert system (14).

2. Monitoring apparatus according to Claim 1, **characterized in that** the force sensor (13) is a fibre-optic force sensor.

3. Monitoring apparatus according to Claim 1 or 2, **characterized in that** at least one lantern ring (9) which keeps the connection area of the pressure sensor (12) free is integrated in the stuffing box packing (8).

4. Monitoring apparatus according to one of the preceding claims, **characterized in that** the drive (6) of the actuation rod (5) is provided with a wear monitoring device which contains actuating travel sensors (16) and/or actuating force sensors (17) and/or torque sensors (18), the measurement data from which are likewise evaluated by the expert system (14).

5. Monitoring apparatus according to one of the preceding claims, **characterized in that** the shut-off or control valve is additionally assigned at least one acceleration sensor (24) and/or structure-borne sound sensor which monitors the shut-off and control valve for leakages between the seat rings and the shut-off element and the measurement data from which are likewise evaluated by the expert system (14).

6. Monitoring apparatus according to one of the preceding claims, **characterized in that** the housing (1) of the control or shut-off valve is assigned an overpressure protection means which is monitored by sensors and the monitoring data from which are likewise evaluated by the expert system (14).

7. Monitoring apparatus according to one of the preceding claims, **characterized in that** the expert system (14) uses a fuzzy logic system to process the collected information and the associated conclusions.

8. Monitoring apparatus according to Claim 7, **characterized in that** the inference engine of the fuzzy logic expert system (14) of the control or shut-off valve outputs a warning signal if stipulated combinations of criteria are determined.

9. Method for monitoring control or shut-off valves which have a stuffing box packing (8) for sealing the actuation rod (5) of the actuation element of the control and shut-off valve, which actuation rod is driven by a drive, and a multiplicity of sensors, the measurement data from which are processed by an expert system (14) and are output via an optical apparatus and/or a bus system for further use, the pressure sensor (12) assigned to the stuffing box packing (8) monitoring the stuffing box packing (8) for leakages, **characterized in that** the prestress of the stuffing box packing (8) is measured at the same time using a force sensor (13) assigned to a clamping apparatus (10, 11) of the stuffing box packing (8), **in that** the measurement data from the pressure sensor (12) and from the force sensor (13) are simultaneously evaluated by the expert system (14), and **in that** an alarm signal is output in the event of a predefined combination of measurement variables.

10. Method for monitoring according to Claim 9, **characterized in that** the expert system (14) uses a fuzzy logic system to process the collected information and the conclusions which can be drawn therefrom.

## Revendications

1. Dispositif de surveillance de vannes de réglage ou d'arrêt qui comporte une garniture de presse-étoupes (8) destinée à assurer l'étanchéité d'une barre de manoeuvre (5) entraînée par un entraînement (6) de l'organe de manoeuvre de la vanne de réglage ou d'arrêt et une pluralité de capteurs dont les données de mesure sont traitées par un système expert (14) et éditées par l'intermédiaire d'un dispositif optique et/ou par l'intermédiaire d'un système de bus pour l'utilisation ultérieure, à la garniture de presse-étoupes (8) étant associé au moins un capteur de pression (12) pour la surveillance des fuites,
**caractérisé par** au moins un capteur de force (13) associé à un dispositif de serrage (10, 11) de la garniture de presse-étoupes (8), pour la surveillance de la précontrainte de la garniture de presse-étoupes (8), les données de mesure du capteur de pression (12) et du capteur de force (13) étant évaluées simultanément par le système expert (14).

2. Dispositif de surveillance selon la revendication 1, **caractérisé en ce que** le capteur de force (13) est un capteur de force à fibre optique.

3. Dispositif de surveillance selon les revendications 1 ou 2, **caractérisé en ce que** dans la garniture de presse-étoupes (8) est intégré au moins un anneau lanterne (9) qui garde libre la zone de raccordement du capteur de pression (12).

4. Dispositif de surveillance selon l'une quelconque des revendications précédentes, **caractérisé en ce que** l'entraînement (6) de la barre de manoeuvre (5) est muni d'un système de contrôle d'usure, qui contient des capteurs (16) de trajet de réglage et/ou des capteurs (17) de force de réglage et/ou des capteurs (18) de couple de rotation, dont les données de mesure sont également évaluées par le système expert (14).

5. Dispositif de surveillance selon l'une quelconque des revendications précédentes, **caractérisé en ce qu'**à la vanne de réglage ou d'arrêt sont associés en supplément au moins un capteur (24) d'accélération et/ou un capteur de bruit de structure qui surveille la vanne de réglage ou d'arrêt au niveau des fuites entre les joints de siège et les organes d'arrêt et dont les données de mesure sont également évaluées par le système expert (14).

6. Dispositif de surveillance selon l'une quelconque des revendications précédentes, **caractérisé en ce qu'**au corps (1) de la vanne de réglage ou d'arrêt est associée une protection contre la surpression surveillée par capteur, dont les données de surveillance sont également évaluées par le système expert (14).

7. Dispositif de surveillance selon l'une quelconque des revendications précédentes, **caractérisé en ce que** pour le traitement des informations collectées et des conclusions qui en résultent, le système expert (14) utilise un système de logique floue.

8. Dispositif de surveillance selon la revendication 7, **caractérisé en ce que** lors de la constatation d'associations de critères fixées, la machine d'interférences du système expert (14) à logique floue de la vanne de réglage ou d'arrêt délivre un signal d'alarme.

9. Procédé de surveillance de vannes de réglage ou d'arrêt qui comportent une garniture de presse-étoupes (8) destinée à assurer l'étanchéité de la barre de manoeuvre (5) entraînée par un entraînement de l'organe de manoeuvre de la vanne de réglage ou d'arrêt et une pluralité de capteurs dont les données de mesure sont traitées par un système expert (14) et éditées par l'intermédiaire d'un dispositif optique et/ou par l'intermédiaire d'un système de bus pour l'utilisation ultérieure, le capteur de pression (12) associé à la garniture de presse-étoupes (8) surveillant la garniture de presse-étoupes (8) au niveau de fuites, **caractérisé en ce qu'**en même temps, avec un capteur de force (13) associé à un dispositif de serrage (10, 11) de la garniture de presse-étoupes (8), la précontrainte de la garniture de presse-étoupes (8) est mesurée, **en ce que** les données de mesure du capteur de pression (12) et du capteur de force (13) sont évaluées simultanément par le système expert (14) et **en ce qu'**en présence d'une association prédéfinie de grandeurs de mesure, un signal d'alarme est délivré.

10. Procédé de surveillance selon la revendication 9, **caractérisé en ce que** pour le traitement des informations collectées et des conclusions qui en résultent, le système expert (14) utilise un système de logique floue.
